# EUROPEAN PATENT APPLICATION

(11) **EP 2 422 871 A1**
(43) Date of publication of application: **29.02.2012**
(21) Application number: 10828425.8
(22) Date of filing: 23.03.2010
(51) Int. Cl.: B01D 63/08, B01D 61/00

(54) **MEMBRANE MODULE AND MEMBRANE MODULE ASSEMBLY, AND IMMERSION-TYPE LAYER-SEPARATING APPARATUS INCLUDING SAME**

(30) Priority: 05.11.2009 KR 20090106363
(71) Applicant: LG Electronics Inc., Seoul 150-721 (KR); Kored Co., Ltd., Seoul 158-858 (KR)
(72) Inventor: CHOI, Woong, Seoul 137-724 (KR); KIM, Incheol, Seoul 137-724 (KR); KIM, Namdoo, Incheon Seoul 407-310 (KR); LEE, Wonseok, Seoul 158-800 (KR)
(74) Representative: Cabinet Plasseraud
(86) International application number: PCT/KR2010/001771
(87) International publication number: WO 2011/055889

(57) **Abstract**

Disclosed is a membrane module including: one or more membrane units covering a support and including a membrane having at least one side fused, wherein both sides of each of the membrane units perpendicular to one side of the membrane are molded to be coupled with the first and second frames, respectively.

## Description

### [Technical Field]

The present invention relates to a membrane module and a membrane module assembly, and an immersion type membrane separator device and, more particularly, to a membrane module having a reduced thickness, a membrane module assembly in which the space between membrane modules is reduced and membrane modules can be easily coupled, and an immersion type membrane separator device having the same.

### [Background Art]

A membrane refers to a phase capable of separating only a particular component from gas, a liquid, a solid, or a mixture thereof, which is based on a principle that a molecular material is separated from a mixture by using physiochemical properties of a membrane.

In the field of a water treatment, membranes are classified into a porous film, a microporous film, and a homogenous film according to a structure, and classified into a microfiltration membrane, an ultrafiltration membrane, a reverse osmosis membrane, a gas separation membrane, a pervaporation membrane, and the like, according to a purpose.

In general, it is difficult to use a membrane alone, and a facility that is able to use a membrane in a separation process is fabricated to use the membrane, and such a facility including a membrane is called a module.

A plate and frame module, a tubular module, a hollow fiber membrane module, and the like, have been commercialized to be used. The hollow fiber membrane module includes two types of modules: a press type hollow fiber membrane module and a suction type (immersion type) hollow fiber membrane module. In case of a tubular membrane, a press type tubular membrane is used.

The press type hollow fiber membrane and the press type tubular membrane should maintain an intra-membrane linear velocity of a certain level or higher in order to reduce membrane contamination, which incurs high power cost. As for the suction type hollow fiber membrane, a surface thereof collides with air bubbles underwater to reduce contamination, in this case, the membrane may be entangled with contaminants on the fiber, damaging the membrane itself.

The separation membrane refers to a membrane formed on a plane or a sheet. This membrane has advantages in that contaminants hardly cling to the membrane, contaminants attached thereto can be easily removed, and there is little possibility in which the membrane is damaged during an operation in comparison to the hollow fiber membrane. However, unlike the hollow fiber membrane, the separation membrane has shortcomings in that it cannot be washed through back washing.

The membrane module is selected under the conditions of a membrane filling rate, allowable raw water turbidity concentration, physical cleansing tolerance, elimination efficiency, and the like. Since a life span of a membrane module and the processing number of membrane modules are greatly affected by the structure and strength of the membrane itself and even by the design and structure of the membrane module, these factors should be considered in design and structure of the membrane module.

Meanwhile, the foregoing membrane module may be configured by coupling a plastic support, a nonwoven fabric, and a membrane to a frame, so the thickness of the membrane module is increased. The increase in the thickness of the frame coupling them may increase the overall thickness of the membrane module.

### [Disclosure]

### [Technical Problem]

Therefore, an object of the present invention is to provide membrane module having a reduced thickness, a membrane module assembly in which the space between membrane modules is reduced and membrane modules can be easily coupled, and an immersion type membrane separator device having the same.

### [Technical Solution]

According to an aspect of the present invention, there is provided a membrane module including:: one or more membrane units covering a support and including a membrane having at least one side fused, wherein both sides of each of the membrane units perpendicular to one side of the membrane are molded to be coupled with the first and second frames, respectively.

The membrane may include first and second membranes, the first and second membranes may cover each face of the support, and both sides of the first and second membranes that face each other may be fused.

The membrane may cover the support in a channel-like shape, and both sides, which are in contact with each other, of the membrane may be fused.

The length of a molded portion where the membrane is molded may be 0.1 to 10% of the length of the membrane.

The first frame may include a discharge opening, and the second frame may be hermetically closed.

The support may be a spacer having a mesh structure.

The first and second frames may include a plurality of protrusions formed on one surface thereof, and a plurality of recesses formed on the outer surface thereof, respectively.

The thickness of the support may range from 0.5 to 3 mm.

According to another aspect of the present invention, there is provided a membrane module assembly including first and second membrane modules including one or more membrane units covering a support and including a membrane having at least one side fused, wherein both sides of each of the membrane units perpendicular to one side of the membrane are molded to be coupled with the first and second frames, respectively, wherein the first and second membrane modules include a plurality of protrusions positioned on one surface thereof, the first and second membrane modules include a plurality of recesses having a shape of press-fitting with the plurality of protrusions, and the protrusions and the recesses are coupled, respectively, to fasten the first and second membrane modules.

The plurality of protrusions and the plurality of recesses may be positioned in the first and second frames of the first and second membrane modules, respectively.

The plurality of protrusions may have a shape in which a middle portion thereof is narrower than an upper portion thereof.

The plurality of protrusions may have a section having a shape of a mortar.

The plurality of protrusions may have a middle portion having a sloped face and an upper portion having a spherical shape.

The plurality of protrusions and the plurality of recesses may be positioned in a linear shape on the first and second frames.

The interval between the support of the first membrane module and the support of the second membrane module may range from 6 to 10 mm.

The interval between the membrane of the first membrane module and the membrane of the second membrane module may range from 3 to 8 mm.

The sum of the thickness of the support and the thickness of the membrane covering the support in the first and second membrane modules may range from 1 to 3.5 mm.

According to another aspect of the present invention, there is provided an immersion type membrane separator device including: a membrane module assembly including a membrane module including one or more membrane units covering a support and including a membrane having at least one side fused, wherein both sides of each of the membrane units perpendicular to one side of the membrane are molded to be coupled with the first and second frames, respectively; a case in which the membrane module assembly is received; and a diffuser provided at a lower portion of the case.

The membrane module assembly may include first and second membrane modules, the first and second membrane modules include a plurality of protrusions positioned on one surface thereof, the first and second membrane modules include a plurality of recesses having a shape of press-fitting with the plurality of protrusions, and the protrusions and the recesses are coupled, respectively, to fasten the first and second membrane modules.

### [Advantageous Effects]

According to embodiments of the present invention, the membrane module and the membrane module assembly, and the immersion type membrane separator device have the advantages in that the thickness of the membrane can be reduced and the interval between membrane modules can be also reduced. Also, the membrane modules can be easily coupled.

### [Description of Drawings]

FIG. 1 is a view showing a membrane module according to an embodiment of the present invention.
FIGS. 2 and 3 are views showing a membrane and a support according to an embodiment of the present invention.
FIG. 4 is a view showing a membrane module according to another embodiment of the present invention.
FIGS. 5 to 9 are views showing a membrane module assembly formed by coupling a protrusion and a recess of the membrane module according to an embodiment of the present invention.
FIG. 10 is a view showing an immersion type membrane separator device including a membrane module assembly.
FIG. 11 is a view showing a membrane module assembly according to an embodiment of the present invention.

### [Best Mode]

Embodiments of the present invention will be described in detail with reference to the accompanying drawings.

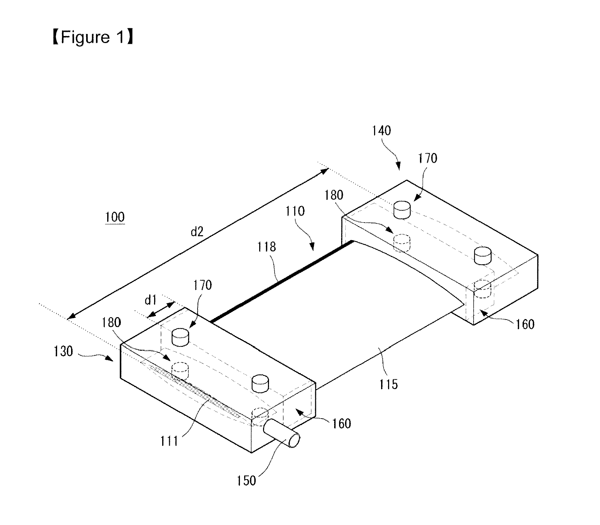

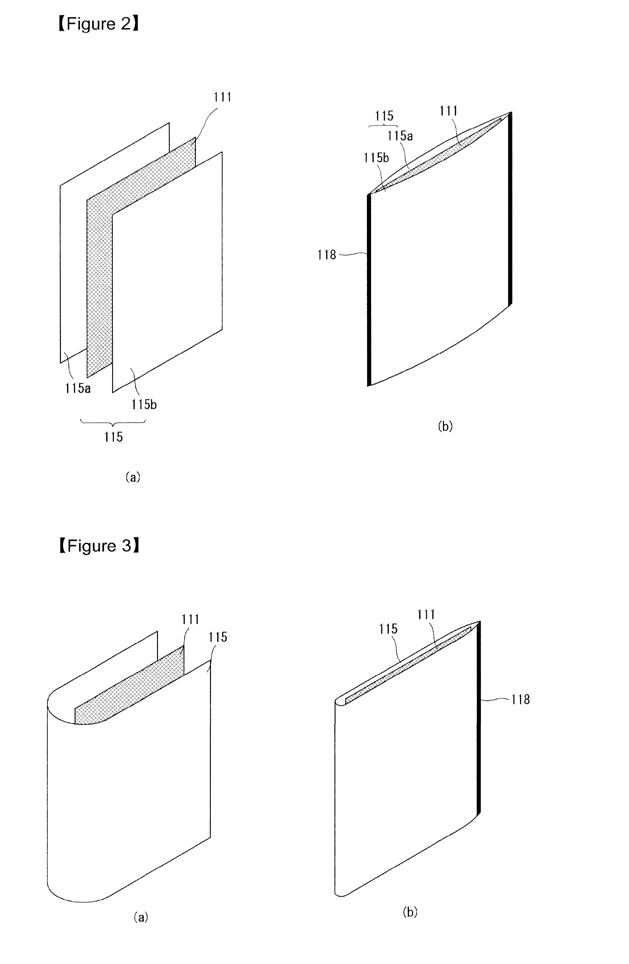

FIG. 1 is a view showing a membrane module according to an embodiment of the present invention. FIGS. 2 and 3 are views showing a membrane and a support according to an embodiment of the present invention.

With reference to FIG. 1, a membrane module 100 according to an embodiment of the present invention includes one or more membrane units 110 covering a support 111 and including a membrane 115 having at least one side fused. Both sides of each of the membrane units 110 perpendicular to the one side of the membrane 115 are molded to be coupled with the first and second frames 130 and 140, respectively.

In detail, the membrane unit 110 may include the support 111 and the membrane 115. The support 111 may have a mesh structure and may be configured as a thin plate having a thickness range from 0.5 mm to 3 mm. The support 111 may have flexibility due to the mesh structure. The support 111 may be covered by the membrane 115 and may be a spacer supporting the membrane 115. A flow path of water may be formed through the mesh structure of the support 111.

The membrane 115 covering the support 111 may have fine holes evenly formed across the entirety thereof to allow only liquid and a solid having a certain size or smaller. The diameter of the holes formed on the membrane 115 may range from 10nm to 10µm, and sort out other floating matters such as a contaminant, or the like, exceeding the range of the diameter. Also, the diameter of the holes may be 100 nm or smaller according to a membrane formation method.

With reference to FIGS. 2 and 3, the foregoing membrane 115 may have a structure covering the support 111 to seal up the support 111, and at least one side of the membrane 115 may be fused.

In detail, the structure of the membrane 115 covering the support 111 and a fabrication method thereof will be described with reference to FIGS. 2(a) and 2(b) as follows.

As shown in FIG. 2(a), the membrane 115 may include a first membrane 115a and a second membrane 115b. The support 111 is interposed between the first and second membranes 115a and 115b to allow the respective faces of the support 111 to be covered by the first and second membranes 115a and 115b and both facing sides of the first and second membranes 115a and 115b covering the support 111 are fused to seal up the support 111.

Here, the first and second membranes 115a and 115b may be fused by using a heat fusion method. The first and second membranes 115a and 115b may be fused such that the area of a fused portion 118 is minimized.

Meanwhile, a different structure of the membrane 115 covering the support 11 and a fabrication method thereof will be described with reference to FIGS. 3(a) and 3(b) as follows.

*48As shown in FIG. 3(a), the membrane 115 having a size sufficient to cover both sides of the support 111 is prepared and bent in a channel-like shape to cover the support 111 within the membrane 115. As shown in FIG. 3(b), both sides, which are in contact, of the membrane 115 covering the support 111 are thermally fused to seal up the support 111.

Thus, unlike the structure of FIG. 2, since only one side of the membrane 115 is fused, a fused portion 118 may be formed at one side of the membrane 115.

Unlike the related art structure in which a plastic support and a nonwoven fabric is interposed between the membranes 115, in the membrane module according to an embodiment of the present invention, only the flexible support having a mesh structure is formed between the membranes 115, advantageously reducing the thickness of the membrane unit 110.

With reference back to FIG. 1, as for the membrane unit 110 having the foregoing structure, both sides of the membrane unit 110 perpendicular to one side where the fused portion 118 of the membrane 115 is positioned are molded to be coupled with the first and second frames 130 and 140.

In detail, the membrane unit 110 including the support 111 and the membrane 115 may be inserted into the first frame 130 with one side open and having a shape of a rectangular parallelepiped, and then, a portion of the interior of the first frame 130 may be filled with an epoxy resin and hardened to mold the membrane unit 110. Subsequently, the other side of the membrane unit 110 which is not molded yet may be inserted into the second frame 140, and then, a portion of the interior of the second frame 140 may be filled with an epoxy resin and hardened to mold the membrane unit 110.

Thus, molded portions 160 may be formed at both sides of the membrane unit 110 so as to be coupled with the first and second frames 130 and 140.

Here, the length d1 of the molded portion 160 may be 0.1 to 10% of the length d2 of the membrane 115. If the length d1 of the molded portion 160 is 0.1% or greater of the length d2 of the membrane 115, excellent bonding force can be obtained between the membrane 115 and the frames 130 and 140, and when the length d1 of the molded portion 160 is smaller than 10% of the length d2 of the membrane 115, a valid area of the membrane 115 substantially processing waste water can be prevented from being reduced.

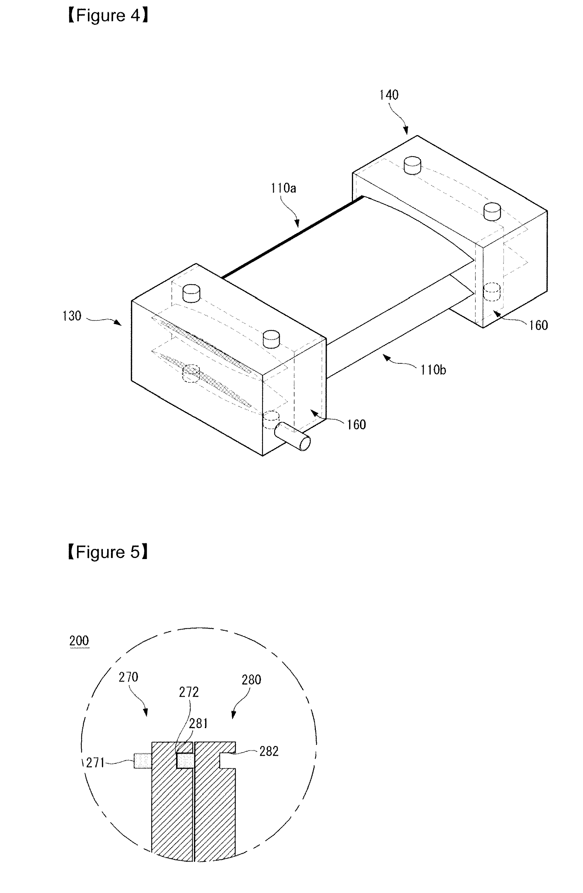

Unlike the foregoing structure of FIG. 1, with reference to FIG. 4 showing a membrane module according to another embodiment of the present invention, two or more membrane units 110a and 110b may be coupled with the first and second frames 130 and 140.

Namely, two or more membrane units 110a and 110b are inserted in the first frame 130 and a portion of the interior of the first frame 130 is filled with an epoxy resin and hardened to mold the membrane units 1110a and 110b. Subsequently, the other sides of the membrane units 110a and 110b which are not molded yet may be inserted into the second frame 140, and then, a portion of the interior of the second frame 140 may be filled with an epoxy resin and hardened to mold the membrane units 110a and 110b.

Thus, since the membrane module is formed by coupling two or more membrane units to the respective frames, the number of membrane units is increased compared with the membrane module in which only one membrane unit is coupled to the frames, enhancing water purification efficiency.

With reference back to FIG. 1, the first frame 130 may include a discharge opening 150 for discharging wafer, whose contaminant has been separated by the membrane unit 110, to the outside through the first frame 130. The second frame 140 may have a hermetically closed structure without such a discharge opening 150.

Thus, water introduced from the membrane unit 110 may move to the first frame with the discharge opening 150 and may be discharged to the outside through a discharge tube (not shown) connected to the discharge opening 150, thus supplying purified water.

Meanwhile, the first and second frames 130 and 140 of the membrane module 100 includes a plurality of protrusions 170 formed on one surface thereof and a plurality of recesses 180 having a corresponding shape allowing the recesses to be press-fit with the protrusions 170.

The protrusions 170 and the recesses 180 may be positioned at edges or at a central portion of one surface of each of the frames 130 and 140, but the present invention is not limited thereto, and the protrusions 170 and the recesses 180 may be positioned any portions of the surface of the frames 130 and 140.

The protrusion 170 may have a cylindrical shape, a shape in which a middle portion is narrower than upper portion thereof, or a shape in which an upper portion has a spherical shape and a middle portion has a downwardly sloped face. The recess 180 may have a shape press-fit with the protrusion 170, namely, allowing the protrusion 170 to be inserted into the recess 180 so as to be coupled. Thus, the recess 180 may have an inverse shape of that of the protrusion 170, whereby the protrusions 170 of the membrane module 100 may be fixedly coupled with the recesses of another membrane module.

FIGS. 5 to 9 are views showing a membrane module assembly formed by coupling a protrusion and a recess of the membrane module according to an embodiment of the present invention. Hereinafter, a membrane assembly formed by coupling the foregoing membrane modules will be described in detail as follows.

With reference to FIG. 5, a first membrane module 270 and a second membrane module 280 are coupled to configure a membrane module assembly 200.

The first and second membrane modules 270 and 280 include protrusions 271 and 281 and recesses 272 and 282, respectively. Here, the protrusion 281 of the second membrane module 280 may be insertedly coupled in the recess 272 of the first membrane module 270.

In detail, the recess 272 of the first membrane module 270 has a shape allowing the protrusion 281 of the second membrane module 280 to be press-fit therein. Here, the protrusions 271 and 281 may have a cylindrical shape, and the recesses 272 and 282 may have a cylindrical shape allowing the protrusions 271 and 281 to be press-fit therein.

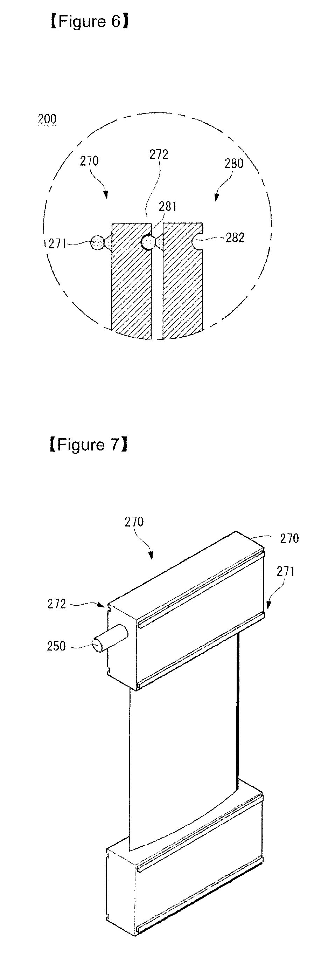

With reference to FIG. 6, the protrusions 271 and 281 are configured such that a middle portion is narrower than an upper portion, and the upper portion has a spherical shape and the middle portion has a downwardly sloped face. For example, as shown in FIG. 6, the protrusions 271 and 282 may have a shape of a tumbling doll with a flat bottom.

Here, although the entrance of the recess 272 is narrow, but it has elasticity. Thus, when the protrusion 281 of the second membrane module 280 is inserted therein, the protrusion 281 may be released when strength of a certain level or higher is applied thereto.

Meanwhile, with reference to FIG. 7, a membrane module 270 having a protrusion and a recess different from the structure of the foregoing protrusion and recess is illustrated.

A plurality of protrusions 271 may be positioned on upper and lower portions of first and second frames 270a and 270b of the membrane module 270 in a lengthwise direction of the first and second frames 270a and 270b of the membrane module 270. Also, a plurality of recesses 272 may be positioned on the other surface of the first and second frames 270a and 270b such that they correspond to the protrusions 271 of the membrane module 270.

Here, a middle portion of the protrusion 271 may be narrower than an upper portion of the protrusion 271, and a lower portion of the middle portion may have a downwardly sloped triangular shape. For example, as shown in FIG. 7, the section of the protrusion 271 may have a shape of a mortar or an hourglass.

The recess 272 may have a shape to be press-fit with the protrusion 271, namely, have a shape allowing the protrusion 271 to be inserted coupled in the recess 272. Thus, the recess 272 has an inverse shape of that of the protrusion 271, thereby allowing the protrusion 271 to be fixedly coupled therein.

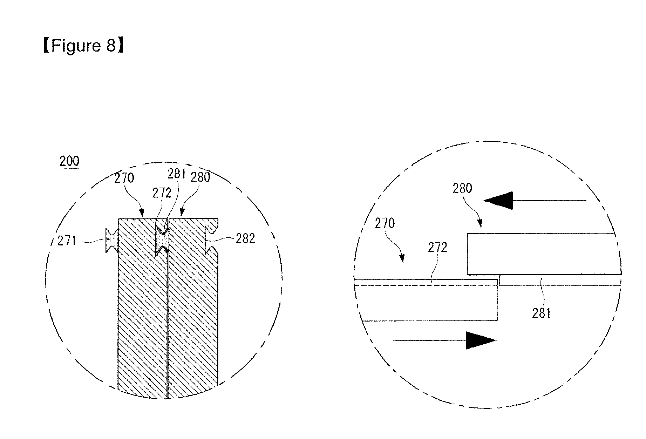

In detail with reference to FIG. 8, the first and second membrane modules 270 and 280 are coupled to configure the membrane module assembly 200.

The first and second membrane modules 270 and 280 include protrusions 271 and 281 and recesses 272 and 282, respectively. Here, the protrusion 281 of the second membrane module 280 may be insertedly coupled in the recess 272 of the first membrane module 270.

In detail, the recess 272 of the first membrane module 270 has a shape allowing the protrusion 281 of the second membrane module 280 to be press-fit therein. In the present embodiment, the first and second membrane modules 270 and 280 may be coupled in a sliding manner. Namely, the recess 272 of the first membrane module 270 and the protrusion 281 of the second membrane module 280 may be positioned to correspond to each other and pushed into each other as shown in FIG. 8.

Thus, since the protrusions 271 and 281 and the recess 272 and 282 are positioned at upper and lower portions of the respective membrane modules 270 and 280, the first and second membrane modules can be reliably coupled.

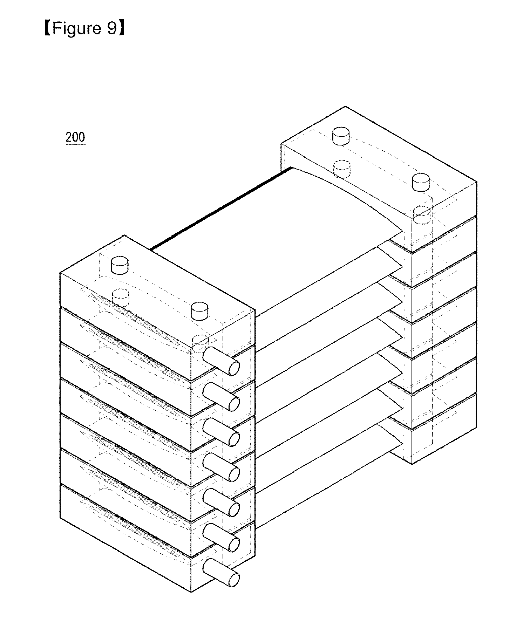

Thus, as shown in FIG. 9, the plurality of membrane modules can be coupled according to the structures of the protrusions and recesses having various shapes, thus completing the membrane module assembly 200.

In the foregoing embodiment as described above, since the protrusions and recesses are formed on the membrane modules and the membrane modules are coupled, the membrane modules can be easily coupled, and since a membrane coupling frame is not used, unit costs and the volume can be reduced, and accordingly, efficiency can be enhanced.

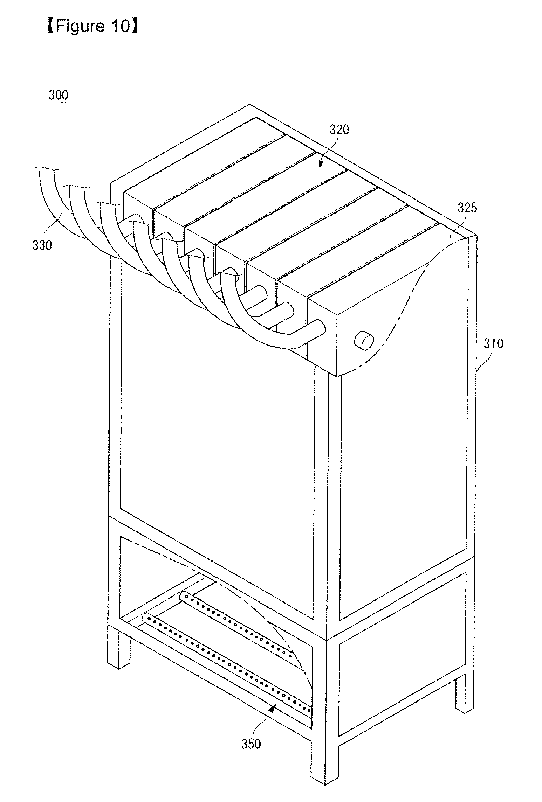

FIG. 10 is a view showing an immersion type membrane separator device including a membrane module assembly.

*80With reference to FIG. 10, the foregoing membrane module assembly 320 may be provided in an immersion type membrane separator device 300. In detail, the immersion type membrane separator device 300 may include a case 310 forming a body, the membrane module assembly 320, and a diffuser 350 provided at a lower portion of the case 310.

Suction tubes 330 are coupled to the membrane modules 325, respectively, to allow water which has been membrane-separated and purified by the membrane modules 325 to be discharged to the outside through the suction tubes 330. The diffuser 350 may be connected with an air tube connected with the outside to allow air to be diffused and moved to an upper side of the case 310.

The immersion type membrane separator device 300 having the foregoing structure purifies waste water within an aeration tank through the following operation.

When waste water is introduced from a lower portion of the immersion type membrane separator device 300, the waste water moves along with air of the diffuser 350 to the membrane module assembly 320. The waste water is membrane-separated in the plurality of membrane modules 325 provided in the membrane module assembly 320 so as to be purified. And, purified water is supplied to the outside through the suction tubes 330 coupled with the membrane modules 325, thus purifying waste water.

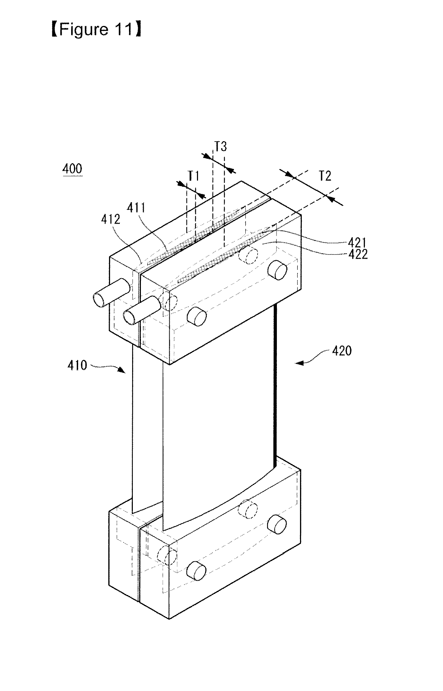

FIG. 11 is a view showing a membrane module assembly 400 according to an embodiment of the present invention.

With reference to FIG. 11, according to the foregoing embodiment of the present invention, the sum T1 of the thickness of supports 411 and 421 provided in the first and second membrane modules 410 and 420, respectively, and the thickness of membranes 412 and 422 covering the supports 411 and 421 can be reduced to be within the range of 1 to 3.5 mm.

Thus, since the thickness of the frames coupling the membrane is reduced, the interval T2 between the support 411 of the first membrane module 410 and the support 421 of the second membrane module 420 can be reduced to be within the range of 6 to 10 mm. Also, the interval T3 between the membrane 412 of the first membrane module 410 and the membrane 422 of the second membrane module 420 can be reduced to be within the range of 3 to 8 mm. Thus, since the thickness of the frames coupling the membranes is reduced, the number of membrane modules inserted in the immersion type membrane separator device can be increased.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims. As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A membrane module comprising:
one or more membrane units covering a support and including a membrane having at least one side fused,
wherein both sides of each of the membrane units perpendicular to one side of the membrane are molded to be coupled with the first and second frames, respectively.

2. The membrane module of claim 1, wherein the membrane comprises first and second membranes, the first and second membranes cover each face of the support, and both sides of the first and second membranes that face each other are be fused.

3. The membrane module of claim 1, wherein the membrane covers the support in a channel-like shape, and both sides, which are in contact with each other, of the membrane are fused.

4. The membrane module of claim 1, wherein the length of a molded portion where the membrane is molded is 0.1 to 10% of the length of the membrane.

5. The membrane module of claim 1, wherein the first frame includes a discharge opening, and the second frame is hermetically closed.

6. The membrane module of claim 1, wherein the support is a spacer having a mesh structure.

7. The membrane module of claim 1, wherein the first and second frames include a plurality of protrusions formed on one surface thereof, and a plurality of recesses formed on the outer surface thereof, respectively.

8. The membrane module of claim 1, wherein the thickness of the support ranges from 0.5 to 3 mm.

9. A membrane module assembly comprising: first and second membrane modules including one or more membrane units covering a support and including a membrane having at least one side fused, wherein both sides of each of the membrane units perpendicular to one side of the membrane are molded to be coupled with the first and second frames, respectively,
wherein the first and second membrane modules include a plurality of protrusions positioned on one surface thereof,
the first and second membrane modules include a plurality of recesses having a shape of press-fitting with the plurality of protrusions, and
the protrusions and the recesses are coupled, respectively, to fasten the first and second membrane modules.

10. The membrane module assembly of claim 9, wherein the plurality of protrusions and the plurality of recesses are positioned in the first and second frames of the first and second membrane modules, respectively.

11. The membrane module assembly of claim 9, wherein the plurality of protrusions have a shape in which a middle portion thereof is narrower than an upper portion thereof.

12. The membrane module assembly of claim 11, wherein the plurality of protrusions have a section having a shape of a mortar.

13. The membrane module assembly of claim 9, wherein the plurality of protrusions have a middle portion having a sloped face and an upper portion having a spherical shape.

14. The membrane module assembly of claim 13, wherein the plurality of protrusions and the plurality of recesses are positioned in a linear shape on the first and second frames.

15. The membrane module assembly of claim 9, wherein the interval between the support of the first membrane module and the support of the second membrane module ranges from 6 to 10 mm.

16. The membrane module assembly of claim 9, wherein the interval between the membrane of the first membrane module and the membrane of the second membrane module ranges from 3 to 8 mm.

17. The membrane module assembly of claim 9, wherein the sum of the thickness of the support and the thickness of the membrane covering the support in the first and second membrane modules ranges from 1 to 3.5 mm.

18. An immersion type membrane separator device comprising:
a membrane module assembly including a membrane module including one or more membrane units covering a support and including a membrane having at least one side fused, wherein both sides of each of the membrane units perpendicular to one side of the membrane are molded to be coupled with the first and second frames, respectively;
a case in which the membrane module assembly is received; and
a diffuser provided at a lower portion of the case.

19. The immersion type membrane separator device of claim 18, wherein the membrane module assembly includes first and second membrane modules,
the first and second membrane modules include a plurality of protrusions positioned on one surface thereof,
the first and second membrane modules include a plurality of recesses having a shape of press-fitting with the plurality of protrusions, and
the protrusions and the recesses are coupled, respectively, to fasten the first and second membrane modules.
